# EUROPÄISCHE PATENTSCHRIFT

(11) **EP 2 561 609 B1**
(45) Veröffentlichungstag und Bekanntmachung des Hinweises auf die Patenterteilung: **13.11.2013**
(21) Anmeldenummer: 11718935.7
(22) Anmeldetag: 15.04.2011
(51) Int. Cl.: H02P 7/00, G05B 19/416, G05B 19/23, G05B 19/19, H02P 23/00

(54) **VERFAHREN ZUR REGELUNG DER POSITION UND/ODER DER GESCHWINDIGKEIT**
METHOD FOR CONTROLLING POSITION AND/OR SPEED
PROCÉDÉ DE RÉGULATION DE LA POSITION ET/OU DE LA VITESSE

(30) Priorität: 17.04.2010 DE 102010015316
(43) Veröffentlichungstag der Anmeldung: 27.02.2013
(73) Patentinhaber: Audi AG, 85045 Ingolstadt (DE)
(72) Erfinder: ILLG, Matthias, 85049 Ingolstadt (DE); HELLENTHAL, Berthold, 90596 Schwanstetten (DE)
(74) Vertreter: Brandt, Kai
(86) Internationale Anmeldenummer: PCT/EP2011/001920
(87) Internationale Veröffentlichungsnummer: WO 2011/128107

(56) Entgegenhaltungen:
- DE-A1-102004 028 103
- DE-C2- 3 333 007
- US-A- 3 263 186
- US-A- 3 900 781
- US-A- 5 598 304

## Beschreibung

Die Erfindung betrifft ein Verfahren zur Regelung der Position und/oder der Geschwindigkeit eines mittels eines Elektromotors entlang einer vorgegebenen Strecke bewegbaren Geräts. Des weiteren betrifft die Erfindung ein elektronisches Regel- und Steuergerät eines Kraftfahrzeugs zur Durchführung eines derartigen Verfahrens.

Aus dem allgemeinen Stand der Technik sind verschiedenste Verfahren zur Regelung der Position und/oder der Geschwindigkeit eines mittels eines Elektromotors entlang einer vorgegebenen Strecke bewegbaren Geräts bekannt. Ein solches Gerät kann beispielsweise ein in dem Armaturenbrett von Kraftfahrzeugen versenkbarer bzw. ausfahrbarer Display eines Fahrzeugassistenzsystems, Fahrzeuginformations-systems oder dergleichen sein. Dabei ist insbesondere der Bewegungsablauf beim Verfahren des Displays von Interesse, da er die Aufmerksamkeit der Fahrzeuginsassen als sogenannte inszenierte Bewegung auf sich zieht.

Es ist bekannt, für derartige Anwendungen Elektromotoren zu verwenden, welche mittels Pulsweitenansteuerung bzw. Pulsweitenmodulation (Pulse Width Modulation/PWM) betrieben werden. Im Allgemeinen wird dabei in einem Speicher eines Steuergeräts für den Verfahrweg des Geräts eine Kurve als Vorgabe der Pulsweitenansteuerung des Elektromotors abgelegt. Danach wird nach einer festen Zeitspanne nach dem Start der Verfahrbewegung einmalig die Soll- und Ist-Position verglichen und aus dem Ergebnis dieses Vergleichs ein fester Korrekturfaktor für den Rest der Kurve berechnet und angewendet. Eine kontinuierliche Nachregelung erfolgt in der Regel nicht. Des weiteren sind in derartigen Steuergeräten die Speicherkapazität und die Ressourcen des Mikrocontrollers begrenzt.

In der DE 602 23 690 T2 und der US 6,137,251 sind Regelungen von Elektromotoren mittels Pulsweitenmodulation (PWM) beschrieben. In der US 5 598 304 wird die Benutzung einer Tabelle beschrieben.

Ausgehend davon liegt der vorliegenden Erfindung die Aufgabe zugrunde, ein Verfahren der eingangs erwähnten Art zu schaffen, welches die Nachteile des Standes der Technik vermeidet, insbesondere eine flüssige Bewegung des Geräts, vorzugsweise unter Einsatz eines Minimums an Systemressourcen ermöglicht.

Diese Aufgabe wird erfindungsgemäß durch ein Verfahren zur Regelung der Position und/oder der Geschwindigkeit eines mittels eines Elektromotors entlang einer vorgegebenen Strecke bewegbaren Geräts gelöst, bei welchem die Regelung kontinuierlich derart durchgeführt wird, dass durch die Wahl einer Stellgröße jeweils eine gezielte Schwankung der Regelgrößen Position und/oder Geschwindigkeit um deren Sollwerte innerhalb eines vorgebbaren Toleranzbereichs erreicht wird. Die Stellgröße stellt dabei die Ausgangsgröße der Regelung zum Stellen des Elektromotors dar.

Durch die erfindungsgemäßen Maßnahmen wird eine fließende Bewegung des bewegbaren Geräts durch eine kontinuierliche Nachregelung auf eine Wegkurve oder auf eine Geschwindigkeitskurve ermöglicht. Sehr vorteilhaft ist dabei, dass eine gezielte bzw. gewollte Schwankung oder Schwingung der Regelgrößen um die Sollwerte innerhalb eines vorgebbaren Toleranzbereichs erzeugt wird. Dazu werden die Regelgrößen Position und/oder Geschwindigkeit, insbesondere mittels einer Nachregelung mit übertriebenen Werten, immer abwechselnd um einen ersten Betrag über den Sollwert und um einen zweiten Betrag unter dem Sollwert sozusagen in einem Toleranzbereich gehalten. Durch diese gewünschte Instabilität wird eine Stabilität erreicht. Somit wird das Verfahren robust gegen Störungen, da diese im Wesentlichen auch nichts anderes sind als Schwingungen um den Sollwert. Aufgrund der Verzögerungszeit, mit der die Istwerte gemessen werden, ist es ebenfalls vorteilhafter, in einem bestimmten Toleranzbereich nachzuregeln.

Der Elektromotor kann mit PWM-Signalen angesteuert werden.

Aus der aktuellen Drehzahl des Elektromotors kann die aktuelle Position und/oder die aktuelle Bewegungsgeschwindigkeit des Geräts bestimmt werden.

Erfindungsgemäß kann ferner vorgesehen sein, dass die aktuelle Drehzahl des Elektromotors mittels wenigstens eines Hall-Sensors erfasst wird.

Sehr vorteilhaft ist es, wenn bei der Regelung lediglich Integerrechenoperationen, insbesondere Addition oder Subtraktion und eine Vergleichsoperation verwendet werden. Wenn in der Regelung nur Integerrechenoperationen mit ausschließlich Addition, Subtraktion und Vergleich verwendet werden, ist eine sehr geringe Mikrocontrollerperformance im Steuergerät für das Regelungsverfahren notwendig. Sonach wird nur eine geringe Rechenleistung benötigt.

Bei der Regelung kann ein Array bzw. Datenfeld mit der erwarteten Position des Geräts zu einem bestimmten Zeitpunkt verwendet werden. Mittels eines derartigen Arrays kann die Bewertung der Position und der Geschwindigkeit erfolgen. Alle Sollpositionen zu jeden festgelegten Zeitpunkten sind dort enthalten. Man erhält die aktuelle Sollgeschwindigkeit aus der Subtraktion der Sollposition zu einem ersten Zeitpunkt von der Sollposition zu einem zweiten Zeitpunkt.

Die Regelung kann Spannungs-, Temperatur- und Chargenschwankungen sowie Verschleiß berücksichtigen.

Bei der Regelung können zwei erste Tabellen zur Bestimmung des Grads der Abweichung der Regelgrößen verwendet werden. Durch den Vergleich zwischen der aktuell erfassten Istposition und der dazugehörigen Sollposition lässt sich mit Hilfe der ersten Tabelle bzw. des Abweichungsarrays für den Ort der Grad der Abweichung bestimmen. Gleiches gilt für die Geschwindigkeit, wenn man das Abweichungsarray für die Geschwindigkeit hinzuzieht.

Vorteilhaft ist es, wenn bei der Regelung eine zweite Tabelle zur Bestimmung der Korrekturwerte für die Pulsweitenmodulationssignale verwendet wird. Die zuvor mit den ersten Tabellen bestimmten Werte hinsichtlich des Grads der Abweichung für die Position und die Geschwindigkeit dienen als Indizes für die zweite Tabelle, dem Inkrementalarray zur Bestimmung der Korrekturwerte, mit welchen letztlich das Pulsweitenmodulationssignal unverändert gelassen, erhöht oder erniedrigt wird.

Das Gerät kann eine im Innenraum eines Kraftfahrzeugs angeordnete ausfahrbare Anzeigevorrichtung, insbesondere ein LCD-Display eines Fahrzeugsystems des Kraftfahrzeugs, sein.

Durch das Array, die ersten Tabellen und die zweite Tabelle, mittels welcher die Regelung durchgeführt wird, ist nur eine geringe Speichertiefe notwendig. Somit werden auf dem Steuergerät nur geringe Speicherressourcen benötigt.

In Anspruch 10 ist ein elektronisches Regel- und Steuergerät eines Kraftfahrzeugs angegeben.

Vorteilhafte Ausgestaltungen und Weiterbildungen der Erfindung ergeben sich aus den Unteransprüchen. Nachfolgend sind anhand der Zeichnung prinzipmäßig Ausführungsbeispiele der Erfindung beschrieben.

Es zeigen:
- Fig. 1: eine schematische Darstellung zur Verdeutlichung einer ersten Ausführungsform eines erfindungsgemäßen Verfahrens; und
- Fig. 2: eine schematische Darstellung zur Verdeutlichung einer zweiten Ausführungsform des erfindungsgemäßen Verfahrens.

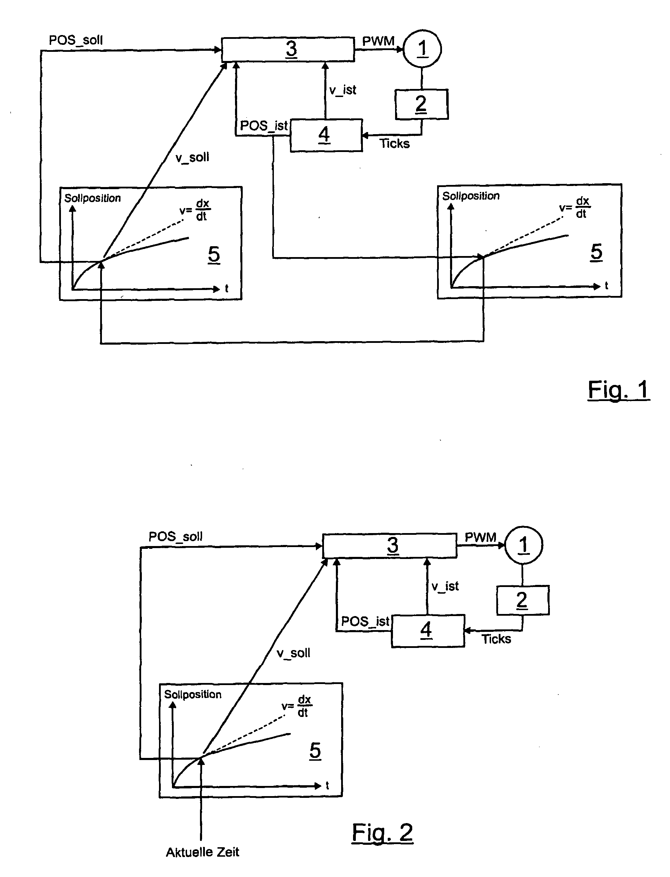

Anhand von Fig. 1 wird ein erfindungsgemäßes Verfahren zur Regelung der Position und/oder der Geschwindigkeit eines mittels eines Elektromotors 1 entlang einer vorgegebenen Strecke bewegbaren Geräts verdeutlicht. Die Regelung wird kontinuierlich derart durchgeführt, dass durch die Wahl einer als Pulsweitenmodulationssignal PWM ausgebildeten Stellgröße jeweils eine gezielte Schwankung der Regelgrößen Position und/oder Geschwindigkeit um deren Sollwerte POS_soll, V_soll innerhalb eines vorgebbaren Toleranzbereichs erreicht wird. Der Elektromotor 1 wird über Pulsweitenmodulation PWM angesteuert. Sonach kann der Elektromotor 1 über ein PWM-Signal verlangsamt oder beschleunigt werden. Mit Hilfe eines Hall-Sensors 2 wird die Drehzahl des Elektromotors 1 erfasst. Die Zielgrößen sind die Position zu einem bestimmten Zeitpunkt und die dazu gehörige Geschwindigkeit. Als Führungsgröße wird der Ort verwendet. Aus der Drehzahl des Elektromotors 1 bestimmt ein Regelalgorithmus 3 die aktuelle Position POS_ist des nicht dargestellten Geräts und dessen aktuelle Bewegungsgeschwindigkeit V_ist. Der Regelalgorithmus 3 kontrolliert zyklisch die Eingangssignale Istposition POS_ist durch Kumulierung aller bisher erfassten Ticks des Hall-Sensors 2 in einem Positionszähler 4 und die aktuelle Geschwindigkeit V_ist anhand der Anzahl der Ticks des Hall-Sensors 2 im gerade abgelaufenen Intervall.

Nachfolgend wird näher auf die Arrays bzw. Tabellen eingegangen, die zur Bewertung der Abweichungen von den Zielgrößen zur Verfügung stehen.

Bei der Regelung wird ein eindimensionales Array bzw. Positionsarray mit den erwarteten Sollpositionen POS_soll zu bestimmten Zeitpunkten t (im vorliegenden Ausführungsbeispiel maximal 100 Positionen) verwendet. Dieses Feld ist in den Figuren vereinfacht als Funktionsdiagramm 5 dargestellt. Dabei ist auf der horizontalen Achse die Zeit t und auf der vertikalen Achse die Sollposition POS_soll aufgetragen. Des weiteren ist die Geschwindigkeit V = dx/dt gestrichelt angedeutet. Das Positionsarray wird zur Bewertung der Position und der Geschwindigkeit eingesetzt. Alle Sollpositionen POS_soll sind zu jedem festgelegten Zeitpunkt dort enthalten und durch Rechnung erhält man die aktuelle Sollgeschwindigkeit V_soll.

Bei der Regelung werden zwei erste Tabellen zur Bestimmung des Grads der Abweichung der Regelgrößen verwendet. Die zwei ersten Tabellen bzw. Arrays weisen Werte auf, die angeben, wie stark die Abweichung der jeweiligen Zielgröße ist bzw. inwiefern der Sollwert von dem Istwert abweicht ("nach unten", "OK", "nach oben"). Eine Tabelle ist für die Position, eine weitere für die Geschwindigkeit vorgesehen. Diese ersten Tabellen werden auch als Abweichungsarrays je für Ort und Geschwindigkeit bezeichnet. Anhand der Vorgaben der ersten Tabellen lässt sich eine Abweichung bezüglich Ort und Geschwindigkeit auf dem gesamten Fahrweg des Geräts ermitteln.

Durch den Vergleich zwischen der aktuell erfassten Istposition POS_ist und der dazugehörigen Sollposition POS_soll lässt sich mit Hilfe der Abweichungsarrays für den Ort der Grad der Abweichung bestimmen. Gleiches gilt für die Geschwindigkeit, wenn man das Abweichungsarray für die Geschwindigkeit hinzuzieht. Diese beiden Werte, Grad der Abweichung für Geschwindigkeit und Ort dienen jetzt als Indizes für eine zweite Tabelle bzw. ein Inkrementalarray, das letztlich das PWM-Signal unverändert lässt, erhöht oder erniedrigt, d. h. die Korrekturwerte für die Pulsweitenmodulationssignale PWM enthält.

Bei dieser zweiten Tabelle bzw. diesem Feld handelt es sich vorliegend um ein 3x3-Array oder 5x5-Array mit der relativen Erhöhung oder Erniedrigung des aktuellen PWM-Signals in Abhängigkeit von der Positions- und der Geschwindigkeitsabweichung. Die zweite Tabelle enthält neun oder fünfundzwanzig Werte mit "Bremswert maximal/mittel", "OK", "Beschleunigungswert maximal/mittel". Verschiedene Ausführungen der zweiten Tabelle sind nachstehend vereinfacht dargestellt. Grundsätzlich ist jedoch jegliche Dimension (AxB) für die Tabelle möglich.

| ORT | | | | |
|---|---|---|---|---|
| | | Zu kurz | OK | Zu weit |
| Geschwindigkeit | Zu langsam | Beschl. Max | | |
| | OK | | PWM ohne Änderung Wert = 0 | |
| | Zu schnell | | | Bremswert max. |

| ORT | | | | | | |
|---|---|---|---|---|---|---|
| | | Viel zu kurz | Zu kurz | OK | Zu weit | Viel zu weit |
| Geschwindigkeit | Viel zu langsam | Beschl. max | | | | |
| | Zu langsam | | | | | |
| | OK | | | PWM ohne Änderung Wert = 0 | | |
| | Zu schnell | | | | | |
| | Viel zu schnell | | | | | Bremswert max. |

Im vorliegenden Ausführungsbeispiel wird der Elektromotor 1 immer mit einem parametrierbaren Startwert gestartet (auch nach einer eventuellen Blockade). Der Startwert hängt dabei folgendermaßen von dem aktuellen Batteriezustand des Kraftfahrzeugs ab: 100 % PWM-Signal bei 9 Volt und 70 % PWM-Signal bei 16 Volt. Bei einer Spannung zwischen 9 Volt und 16 Volt wird eine ganzzahlige Interpolation durchgeführt.

Bei dem Regelungsverfahren werden lediglich Integerrechenoperationen, insbesondere Addition oder Subtraktion und eine Vergleichsoperation verwendet. Durch die genannten Tabellen bzw. Arrays wird nur eine geringe Speicherkapazität benötigt. Das Gerät ist als eine im Innenraum eines Kraftfahrzeugs angeordnete ausfahrbare Anzeigevorrichtung, insbesondere ein LCD-Display eines Fahrzeugsystems des Kraftfahrzeugs, ausgebildet. Das erfindungsgemäße Regelverfahren läuft auf einem elektronischen Regel- und Steuergerät des Kraftfahrzeugs ab.

In Fig. 2 ist das erfindungsgemäße Verfahren in einer alternativen Ausführungsform mit der Führungsgröße Zeit angedeutet. Dazu wird wie folgt vorgegangen. Zunächst werden die aktuelle Zeit und die aktuelle Drehzahl des Elektromotors 1 gemessen. Daraus wird die Position bestimmt. Anhand der aktuellen Position des Geräts wird die Sollzeit in dem Positionsarray 5 bestimmt. Die tatsächliche Zeit t wird durch die Sollzeit zu der aktuellen Istposition POS_ist ersetzt. Damit ist die Abweichung vom Ort gleich 0. Mit Hilfe der Differenz der aktuellen Geschwindigkeit V_ist und der Sollgeschwindigkeit V_soll zu dem ermittelten Zeitpunkt (Sollzeit) kann durch Zuhilfenahme des Abweichungsarrays für die Geschwindigkeit der Grad der Geschwindigkeitsabweichung ermittelt werden. Dieser Grad bestimmt anhand der Ordinate (Y-Achse) des Inkrementalarrays die Stellgröße. Dieses Konzept soll ein- bzw. ausgeschaltet werden können.

Im vorliegenden Ausführungsbeispiel umfasst die Regelung folgende Randbedingungen. Der Basistakt des Regelungsalgorithmus 3 beträgt 20 ms. Alle 2 ms wird das Hall-Signal abgetastet. Die minimale errechnete Pulsbreite beträgt 8 ms. Es sind zwei Drehkinematiken mit zwei unterschiedlichen Verfahrwegen zu unterstützen. Es ist ein parametrierbarer PWM-Startwert vorgegeben. Alle Arrays sind im Steuergerät des Kraftfahrzeugs, insbesondere in einem EEPROM verfügbar. Es sind nur ganzzahlige Rechenoperationen zugelassen.

## Patentansprüche

1. Verfahren zur Regelung der Position und/oder der Geschwindigkeit einer mittels eines mittels Pulsweitenmodulation (PWM) angesteuerten Elektromotors (1) entlang einer vorgegebenen Strecke bewegbaren im Innenraum eines Kraftfahrzeugs angeordneten ausfahrbaren Anzeigevorrichtung,
**dadurch gekennzeichnet, dass**
die Regelung kontinuierlich derart durchgeführt wird, dass durch die Wahl einer Stellgröße jeweils eine gezielte Schwankung der Regelgrößen Position und/oder Geschwindigkeit um deren Sollwerte (POS_soll, V_soll) innerhalb eines vorgebbaren Toleranzbereichs erreicht wird, wobei bei der Regelung ein Array (5) mit der erwarteten Position (POS_soll) der im Innenraum eines Kraftfahrzeugs angeordneten ausfahrbaren Anzeigevorrichtung zu einem bestimmten Zeitpunkt (t), zwei erste Tabellen zur Bestimmung des Grads der Abweichung der Regelgrößen und eine zweite Tabelle zur Bestimmung der Korrekturwerte für die Pulsweitenmodulationssignale verwendet werden.

2. Verfahren nach Anspruch 1,
**dadurch gekennzeichnet, dass**
die aktuelle Drehzahl des Elektromotors (1) mit Hilfe wenigstens eines Hall-Sensors (2) erfasst wird.

3. Verfahren nach Anspruch 1 oder 2,
**dadurch gekennzeichnet, dass**
bei der Regelung lediglich Integerrechenoperationen, insbesondere Addition oder Subtraktion und eine Vergleichsoperation verwendet werden.

4. Verfahren nach einem der Ansprüche 1, 2 oder 3,
**dadurch gekennzeichnet, dass**
die im Innenraum eines Kraftfahrzeugs angeordnete ausfahrbare Anzeigevorrichtung ein LCD-Display eines Fahrzeugsystems des Kraftfahrzeugs ist.

5. Verfahren nach einem der Ansprüche 1 bis 4,
**dadurch gekennzeichnet, dass**
die Regelgrößen Position und/oder Geschwindigkeit immer abwechselnd um einen ersten Betrag über dem Sollwert und um einen zweiten Betrag unter dem Sollwert in dem Toleranzbereich gehalten werden.

6. Elektronisches Regel- und Steuergerät eines Kraftfahrzeugs zur Durchführung eines Verfahrens gemäß einem der Ansprüche 1 bis 5.

## Claims

1. Method for controlling the position and/or speed of a retractable display device, which device is arranged in the interior space of a motor vehicle so as to be movable along a predetermined course by means of an electric motor (1) which is controlled by pulse width modulation (PWM), **characterised in that**
the control operation is carried out continuously in such a way that targeted fluctuation of the controlled variables of position and/or speed around the target values (POS_target, V_target) thereof is achieved in each case within a predefined tolerance range by selecting a manipulated variable, an array (5) being used during the control operation, which array contains the expected position (POS_target) of the retractable display device arranged in the interior space of a motor vehicle at a particular time (t), two first tables for determining the degree of deviation of the controlled variables and a second table for determining the correction values for the pulse width modulation signals.

2. Method according to claim 1, **characterised in that** the current speed of the electric motor (1) is detected by means of at least one Hall effect sensor (2).

3. Method according to either claim 1 or claim 2, **characterised in that** only integer arithmetic operations, in particular addition or subtraction and a comparison operation, are used during the control operation.

4. Method according to any of claims 1, 2 or 3, **characterised in that** the retractable display device arranged in the interior space of a motor vehicle is an LCD display system of a vehicle system of the motor vehicle.

5. Method according to any of claims 1 to 4, **characterised in that** the controlled variables position and/or speed are kept in the tolerance range alternating constantly between a first amount above the target value and a second amount below the target value.

6. Electronic open- and closed-loop control device of a motor vehicle for carrying out a method according to any of claims 1 to 5.

## Revendications

1. Procédé de régulation de la position et/ou de la vitesse d'un dispositif d'affichage extensible agencé dans l'espace interne d'un véhicule automobile et déplaçable le long d'une course prédéterminée au moyen d'un moteur électrique (1) commandé par modulation d'impulsions en largeur (MIL),
**caractérisé en ce que**
la régulation est réalisée en continu de sorte que, par le choix d'une grandeur de commande, on atteigne respectivement une variation appropriée des grandeurs de réglage, à savoir la position et/ou la vitesse, autour de leurs valeurs théoriques (POS_soll, V_soll) dans une plage de tolérances prédéterminable, dans lequel, lors du réglage, on utilise un schéma (5) avec la position attendue (POS_soll) du dispositif d'affichage extensible agencé dans l'espace interne d'un véhicule automobile à un moment déterminé (t), deux premières tables pour déterminer le degré de déviation des grandeurs de réglage et un seconde table pour déterminer les valeurs de correction pour les signaux de modulation d'impulsions en largeur.

2. Procédé selon la revendication 1,
**caractérisé en ce que**
le nombre de tours courant du moteur électrique (1) est saisi à l'aide d'au moins un capteur de Hall (2).

3. Procédé selon la revendication 1 ou la revendication 2,
**caractérisé en ce que**,
lors du réglage, on utilise seulement des opérations de calcul entières, en particulier une addition ou une soustraction et une opération de comparaison.

4. Procédé selon l'une quelconque des revendications 1, 2 ou 3,
**caractérisé en ce que**
le dispositif d'affichage extensible agencé dans l'espace interne d'un véhicule automobile est un affichage à cristal liquide (LCD) d'un système du véhicule automobile.

5. Procédé selon l'une quelconque des revendications 1 à 4,
**caractérisé en ce que**
les grandeurs de réglage, à savoir la position et/ou la vitesse, sont toujours maintenues en alternance autour d' un premier niveau au-dessus de la valeur théorique et autour d'un second niveau en dessous de la valeur théorique dans la zone de tolérances.

6. Appareil de réglage et de commande électronique d'un véhicule automobile pour réaliser un procédé selon l'une quelconque des revendications 1 à 5.
